# EUROPEAN PATENT APPLICATION

(11) **EP 4 534 307 A1**
(43) Date of publication of application: **09.04.2025**
(21) Application number: 22944059.9
(22) Date of filing: 01.06.2022
(51) Int. Cl.: B60H 1/32, B60H 1/34

(54) **AIRFLOW GENERATION SYSTEM**

(71) Applicant: NISSAN MOTOR CO., LTD., Kanagawa 221-0023 (JP)
(72) Inventor: MIURA, Susumu, Atsugi-shi, Kanagawa 243-0123 (JP); ISHII, Kanji, Atsugi-shi, Kanagawa 243-0123 (JP)
(74) Representative: Global IP Europe Patentanwaltskanzlei
(86) International application number: PCT/JP2022/022304
(87) International publication number: WO 2023/233579

(57) **Abstract**

The present invention comprises a cold source 1 that is disposed in a roof panel R of a vehicle V and that has a radiant cooling function, a roof trim T, a cold airflow path 2 formed between the cold source 1 and the roof trim T, an air inflow port 3 that allows air in a cabin 50 to flow into the cold airflow path 2, an air outflow port 4 that allows air in the cold airflow path 2 to flow out to the cabin 50, and an airflow generator 5 that generates a cold airflow F1 in a direction from the air inflow port 3 to the air outflow port 4, an airflow F2 circulating in a direction from the air outflow port 4 side to the air inflow port 3 side being generated in the cabin 50. A temperature of the entire cabin 50 can be reduced using a small amount of energy.

## Description

### Technical Field

The present invention relates to an airflow generation system that is used to reduce cabin temperature in an automobile or another of a variety of vehicles.

### Background Technology

A prior-art example of an airflow generation system such as is described above is described in, for example, Patent Citation 1. The airflow generation system described in Patent Citation 1 comprises an air-conditioning device disposed on a roof of a vehicle and a circulation device disposed in a cabin. The air-conditioning device takes in cabin air from an air-conditioning intake port into an air-conditioning communication passage, and blows air cooled by an evaporator in the air-conditioning communication passage out to the cabin from an air blowout port. The circulation device includes a circulation blower, takes in air blown out from an air-conditioning blowout port toward a circulation intake port into a circulation communication passage, and blows the air from a circulation blowout port toward an air-conditioning intake port.

### Prior Art Citations

### Patent Citations

Patent Citation 1: Japanese Laid-open Patent Application No. 2019-182118

### Summary of the Invention

### Problems to be Solved by the Invention

However, in a prior-art airflow generation system such as is described above, cold air from the air-conditioning device disposed on the roof, i.e., an onboard air conditioner is circulated by a circulation device disposed in the cabin, and zone air conditioning of the cabin is performed. Therefore, for example, a large amount of energy is required to lower a temperature of an entire cabin that has a high temperature when the vehicle is parked.

The present invention was devised in consideration of the situation of the prior art described above, it being an object of the invention to provide an airflow generation system that can reduce the temperature of the entire cabin using a small amount of energy.

### Means For Solving the Problems

An airflow generation system according to the present invention comprises a cold source that is disposed on a roof panel of a vehicle and that has a radiant cooling function for maintaining a lower temperature than a temperature of a cabin, a roof trim disposed on an inner side of the roof panel, a cold airflow path formed between the cold source and the roof trim, an air inflow port that allows cabin air to flow into the cold airflow path, and an air outflow port that allows air in the cold airflow path to flow out to the cabin. The airflow generation system is characterized by comprising an airflow generator that generates a cold airflow in the cold airflow path in a direction from the air inflow port to the air outflow port, an airflow circulating in a direction from the air outflow port side to the air inflow port side being generated in the cabin.

### Effect of the Invention

In the airflow generation system according to the present invention, the airflow generator generates a cold airflow in the cold airflow path in a direction from the air inflow port to the air outflow port. That is, in the airflow generation system, since cabin air that has flowed into the cold airflow path from the air inflow port is cooled by a cold source having a radiant cooling function, a cold airflow is generated in the cold airflow path merely due to the airflow generator being driven. The airflow generation system then causes cold air to flow out from the air outflow port to the cabin. As a result, a circulating airflow, which is a cold airflow in a direction from the air outflow port side to the air inflow port side, is generated in the cabin, and the temperature of the cabin is reduced.

Thus, in the airflow generation system according to the present invention, a cold airflow in the cold airflow path and a circulating airflow in the cabin are generated merely due to the airflow generator being driven, and it is possible to reduce the temperature of the entire cabin using a small amount of energy.

### Brief Description of the Drawings

Figure 1 is a side explanatory drawing of a main part of a vehicle, and is for describing a first embodiment of an airflow generation system according to the present invention;
Figure 2(A) is a cross-sectional view based on arrow line A-A in Figure 1, 2(B) is a cross-sectional view based on arrow line B-B, and 2(C) is a cross-sectional view based on arrow line C-C;
Figure 3(A) is a horizontal cross-sectional explanatory drawing for describing a transverse airstream direction adjustment mechanism, 3(B) is a vertical cross-sectional explanatory drawing for describing a transverse airstream direction adjustment mechanism, and 3(C) is a vertical cross-sectional explanatory drawing for describing a longitudinal airstream direction adjustment mechanism, in a second embodiment of the airflow generation system according to the present invention;
Figure 4(A) is a side explanatory drawing of a main part of a vehicle for describing a third embodiment of the airflow generation system according to the present invention, and 4(B) is a side explanatory drawing of a main part of a vehicle for describing a fourth embodiment;
Figure 5 includes graphs of the results of measuring, under different conditions, (A) a temperature of a heater portion, (B) a temperature of a windshield portion, and (C) a temperature of a roof portion;
Figure 6 includes graphs of the results of measuring, under different conditions with a fixed intake temperature, (A) the temperature of the heater portion, (B) the temperature of the windshield portion, and (C) the temperature of the roof portion;
Figure 7 is a graph of the results of measuring an amount of temperature change in a driver seat portion in order to confirm a partitioning effect;
Figure 8 includes graphs of the results of operating a defroster and measuring (A) an air phase temperature of the driver seat, and (B) the temperature of the roof portion; and
Figure 9 includes graphs of the results of changing the intake temperature and measuring (A) the temperature of the roof portion, (B) the temperature of the heater portion, and (C) the air phase temperature of the driver seat.

### Modes for Carrying Out the Invention

### <First embodiment>

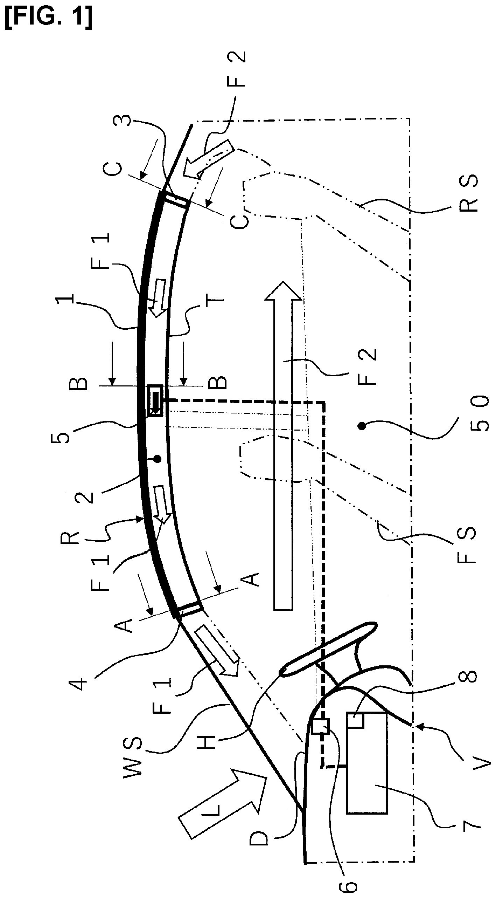

Figure 1 illustrates a first embodiment of an airflow generation system according to the present invention. A vehicle V depicted therein, for which the left direction in the drawing is forward, has a roof panel R and a windshield WS, and inside a cabin 50 there are provided a front seat FS, a rear seat RS, a dashboard D, a steering wheel H, etc.

The airflow generation system shown in Figure 1 comprises, as a basic configuration, a cold source 1 that is disposed on the roof panel R of the vehicle V and that has a radiant cooling function for maintaining a lower temperature than a temperature of the cabin 50, a roof trim T disposed on an inner side of the roof panel R, and a cold airflow path 2 formed between the cold source 1 and the roof trim T. Figure 1 schematically depicts the components for the sake of convenience, and accurate positions, sizes, and other features of the components are not limited to those in the drawing.

The airflow generation system also comprises an air inflow port 3 that allows air in the cabin 50 to flow into the cold airflow path 2, an air outflow port 4 that allows air in the cold airflow path 2 to flow out to the cabin 50, and an airflow generator 5 that generates a cold airflow F1 in the cold airflow path 2 in a direction from the air inflow port 3 to the air outflow port 4. The airflow generation system generates a circulating airflow F2 in the cabin 50 in a direction from an air outflow port 4 side to an air inflow port 3 side.

The cold source 1 is well known as a cooling sheet or structure various fields such as mobile bodies and buildings, and has a radiant cooling function. In this embodiment, the cold source 1 is provided on an outer panel of the roof panel R.

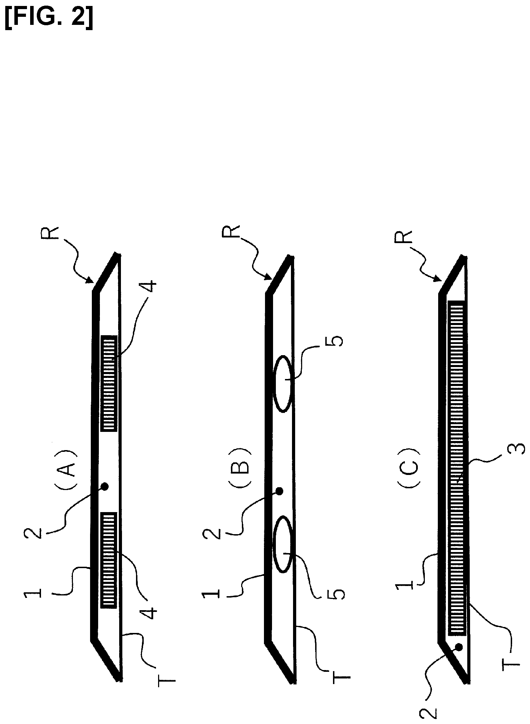

The roof trim T is an interior material for a roof portion. As shown in Figure 2, the cold airflow path 2 is formed in substantially the entire area between the roof trim T and the cold source 1, and in this embodiment, the roof trim T is integrally provided with the air inflow port 3 and the air outflow port 4. The cold airflow path 2 is closed at both ends in a vehicle left-right direction. In a more preferred configuration, the air inflow port 3 can be disposed rearward of a center of the roof trim T in a vehicle front-rear direction, and in this embodiment, the air inflow port 3 is disposed at a vehicle rear end of the roof trim T. In addition, in a more desired configuration, the air outflow port 4 can be disposed forward of the center of the roof trim T in the vehicle front-rear direction, and in this embodiment, the air outflow port 4 is disposed at a vehicle front end of the roof trim T.

In the airflow generation system of the illustrated example, air outflow ports 4, 4 are disposed in two locations in the vehicle left-right direction to correspond to a driver seat and a passenger seat of the front seat FS as shown in Figure 2(A), and one air inflow port 3 is disposed across the vehicle left-right direction as shown in Figure 2(C). In this embodiment, the air outflow ports 4, 4 are disposed facing the dashboard D and an upper surface of an instrument panel. The quantity and size of the air outflow ports 4 and air inflow ports 3 are not limited and can be changed as appropriate.

There are no particular limitations in regard to the airflow generator 5 as long as a unidirectional airflow is generated in the cold airflow path 2; typically a fan is used. The airflow generator 5 of this embodiment is disposed inside the cold airflow path 2, in the center in the vehicle front-rear direction. In a more preferred configuration, airflow generators 5 can be disposed in multiple locations in the vehicle left-right direction, and in this embodiment, airflow generators 5, 5 are disposed in two locations in the vehicle left-right direction as shown in Figure 2(B). The airflow generators 5 generate a cold airflow F1 in the cold airflow path 2 in a direction from the air inflow port 3 to the air outflow ports 4, i.e., a direction from the rear of the vehicle to the front of the vehicle. The quantity and placement of airflow generators 5 is not limited.

The airflow generation system of this embodiment also comprises an airflow controller 6 that controls the airflow generators 5. Among functions of driving and stopping the airflow generators 5 and adjusting an airflow rate, at least the functions driving and stopping are provided to the airflow controller 6, but in this embodiment, the airflow controller 6 also has a function of adjusting the airflow rate. The airflow rate can be adjusted by changing an output of the airflow generators (fans) 5.

The airflow controller 6 has an operation unit that is manually operated, and can be operated in conjunction with an automobile air conditioner 7. In this embodiment, a temperature detector 8 is provided to detect the temperature of the cabin 50, and the airflow generators 5 and the automobile air conditioner 7 can be controlled based on of the temperature detected by the temperature detector 8.

In the airflow generation system comprising the configuration described above, the airflow generators 5 generate a cold airflow F1 in the cold airflow path 2 in a direction from the air inflow port 3 to the air outflow ports 4. That is, in the airflow generation system, air in the cabin 50, having been caused to flow into the cold airflow path 2 from the air inflow port 3, is cooled by the cold source 1 having the radiant cooling function, and the cold airflow F1 is therefore generated in the cold airflow path 2 merely due to the airflow generators 5 being driven. The airflow generation system then causes cold air to flow out from the air outflow ports 4 to the cabin 50.

As a result, in the cabin 50 is generated a circulating airflow F2, which is a cold airflow in a direction from the air outflow ports 4 side to the air inflow port 3, i.e., in a direction from the front of the vehicle to the rear, and the temperature of the cabin 50 is reduced. In addition, air that has flowed to the rear of the cabin 50 is taken into the cold airflow path 2 from the air inflow port 3 and cooled again.

Thus, in the airflow generation system, the cold airflow F1 in the cold airflow path 2 and the circulating airflow in the cabin 50 are continuously generated merely due to the airflow generators 5 being driven, and the temperature of the entire cabin 50 can be reduced using a small amount of energy.

The airflow generation system described above can be incorporated compactly into an existing roof trim R due to the roof trim R being configured having the air inflow port 3 and the air outflow ports 4. Moreover, the roof trim R having the airflow generation system described above is of a unitary structure and can contribute to, *inter alia,* improving assembly workability of the vehicle V.

When the vehicle V is exposed to direct sunlight (arrow L in Figure 1) while parked, the top surfaces of the dashboard D and the instrument panel reach the highest temperatures. Therefore, a temperature in a front area of the cabin 50 readily rises, and heat radiation from the top surfaces of the dashboard D and the instrument panel can cause discomfort to the occupants.

In the airflow generation system described above, due to the air inflow port 3 being disposed rearward of the center of the roof trim R in the vehicle front-rear direction and the air outflow ports 4 being disposed forward of the center of the roof trim R in the vehicle front-rear direction, mixing of warm air and cold air in the cold airflow path 2 is minimized and heat conversion efficiency is improved.

In the airflow generation system described above, particularly due to the air outflow ports 4 being disposed facing towards the upper surfaces of the dashboard D and the instrument panel, the upper surfaces of the dashboard D and the instrument panel, which are heat-radiating areas, are cooled in a concentrated manner, and the temperature of the cabin 50 is quickly reduced.

Furthermore, in the airflow generation system described above, the airflow generators 5 are disposed inside the cold airflow path 2, whereby a pressure difference is created in the cold airflow path 2, a cold airflow F1 having a sufficient flow rate can be easily generated, and the interior appearance of the cabin 50 can be improved by visually hiding the instruments.

Furthermore, in the airflow generation system described above, due to the airflow generators 5 being disposed in multiple locations in the vehicle left-right direction, the flow rate of the cold airflow F1 is increased, whereby the flow rate of the circulating airflow F2 is increased, and the function of cooling the entire cabin 50 can be further improved.

Furthermore, the airflow generation system described above comprises an airflow controller 6 that controls the airflow generators 5, and the airflow controller 6 has a function of operating and stopping the airflow generators 5, or operating and stopping the airflow generators 5 and adjusting the air flow rate. As a result, the airflow generation system can be easily operated manually and can also be automatically controlled.

Furthermore, the airflow generation system described above comprises a temperature detector 8 that detects the temperature of the cabin 50, and the airflow generators 5 are controlled based on of the temperature detected by the temperature detector 8, whereby automatic control is made possible and the airflow generation system can be operated in conjunction with the automobile air conditioner 7. Since the airflow generation system functions as a part of the automobile air conditioner 7, a device for controlling the automobile air conditioner, which is provided with the airflow generation system described above, can accordingly reduce energy required for air conditioning.

Furthermore, in an automobile provided with the airflow generation system described above, since the temperature of the cabin can be reduced using a small amount of energy, overall energy savings and efficient energy distribution are enabled.

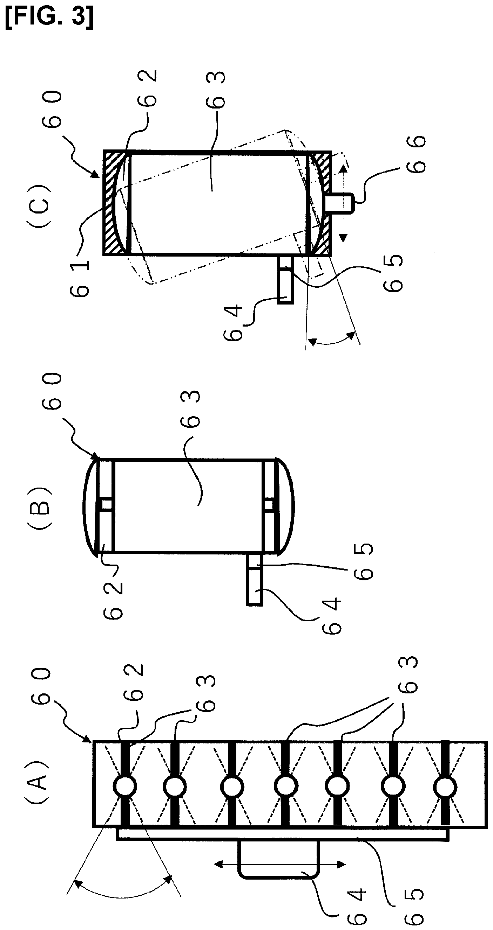

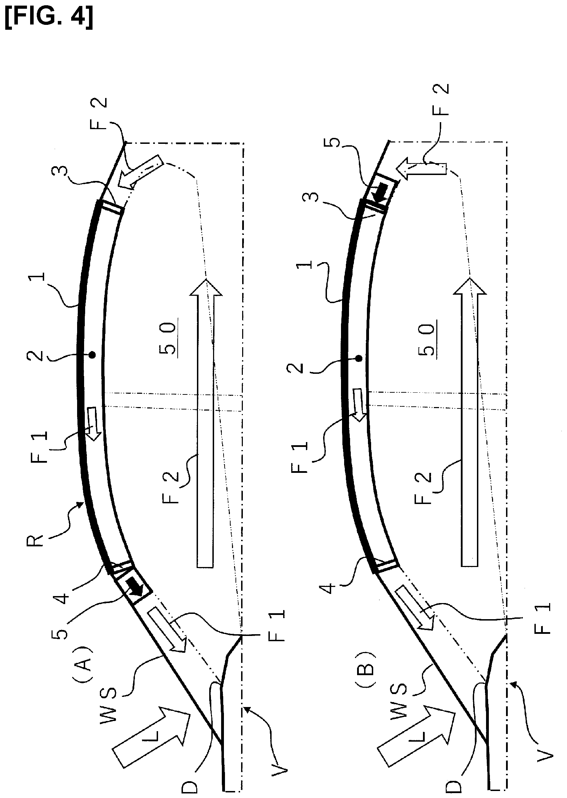

Figures 3 and 4 are drawings used to describe second through fourth embodiments of the airflow generation system according to the present invention. In the following embodiments, the same components as those in the first embodiment are denoted by the same reference numerals, and detailed description thereof shall be omitted.

### <Second Embodiment>

The airflow generation system comprises an airstream direction adjustment mechanism 60 that changes a flow direction of air flowing out to the cabin 50, as shown in Figure 3. The airstream direction adjustment mechanism 60 is provided with a rectangular fixed frame 61 attached to an air outflow port (reference numeral 4 in Figure 1) as shown in Figures 3(A) and (B), and a rectangular movable frame 62 attached to an inner side of the fixed frame 61, as shown in Figure 3(C).

The fixed frame 61 and the movable frame 62 are combined with each other such that contact surfaces thereof form a spherical or curved pair. A plurality of louvers 63 rotatably supported by vertical shafts are arranged inside the movable frame 62. A common link 65 having a left-right operation part 64 is connected to the louvers 63. The movable frame 62 also has, at a lower part thereof, an upward/downward operation part 66 that passes through the fixed frame 61 in a downward direction.

By moving the left-right operation part 64 of the airstream direction adjustment mechanism 60 in the vehicle left-right direction, it is possible to simultaneously rotate the louvers 63 and change the direction of the cold airflow out of the air outflow port in the left-right direction, as shown by the dotted lines in Figure 3(A). In addition, it is possible to rotate the movable frame 62 in the upward/downward direction in relation to the fixed frame 61, and change the direction of the cold airflow out of the air outflow port in the upward/downward direction, by moving the upward/downward operation part 66 of the airstream direction adjustment mechanism 60 in the vehicle front-rear direction.

An airflow generation system comprising such an airstream direction adjustment mechanism 60 makes it possible to obtain the same action and effect as the first embodiment, select airstream direction in accordance with occupant preference, and further improve convenience. The configuration of the airstream direction adjustment mechanism 60 is not limited to that of the embodiment described above; the movable component may be driven by a motor, and as component such as a throttle for adjusting airstream quantity may be added.

### <Third and Fourth Embodiments>

In the airflow generation system shown in Figure 4, the airflow generators 5 are disposed outside the cold airflow path 2, in at least one of the air inflow port 3 and the air outflow ports 4. In the airflow generation system shown in Figure 4(A), the airflow generators 5 are disposed outside the cold airflow path 2 and outside the air outflow ports 4.

In the airflow generation system described above, by operating the airflow generators 5 disposed outside the air outflow ports 4, the interior of the cold airflow path 2 is suctioned, air in the cabin 50 is drawn into the cold airflow path 2 from the air inflow port 3, and the drawn in air is cooled by the cold source 1.

The airflow generation system shown in Figure 4(B) is configured such that the airflow generators 5 are disposed outside the cold airflow path 2 and outside the air inflow port 3. In this airflow generation system, by operating the airflow generators 5 disposed outside the air inflow port 3, pressure is increased in the cold airflow path 2, the air in the cabin 50 is sent from the air inflow port 3 into the cold airflow path 2, and the sent air is cooled by the cold source 1.

The airflow generation systems described above make it possible to obtain the same action and effect as the first embodiment, create a pressure difference in the cold airflow path 2 to generate a cold airflow, and reduce, *inter alia,* a height dimension of the cold airflow path to ensure capacity in the cabin 50.

In the airflow generation system, the airflow generators 5 can be disposed in both the air inflow port 3 and the air outflow ports 4, the airflow generators 5 can be disposed both inside and outside the cold airflow path 2, and the positions and placement locations of the airflow generators 5 can be freely selected.

### <Testing>

A test was conducted on an airflow generation system according to the present invention, in which an airflow was generated under the following conditions 1 to 7 and temperatures of various portions were measured. The portions measured for temperature were a heater portion of the dashboard, a windshield portion, a roof portion, and a head portion of the driver seat.

Condition 1: A rear-to-front airflow was generated in the cold airflow path 2.

Condition 2: A front-to-rear airflow was generated in the cold airflow path 2.

Condition 3: A partition for directing cold airflow was disposed in the cold airflow path 2, and a rear-to-front airflow was generated.

Condition 4: A partition was disposed in the cold airflow path 2, and a front-to-rear airflow was generated.

Condition 5: A defroster was operated.

Condition 6: A partition was disposed in the cold airflow path 2, intake temperature was fixed, and a rear-to-front airflow was generated.

Condition 7: A partition was disposed in the cold airflow path 2, intake temperature was changed, and a front-to-rear airflow was generated.

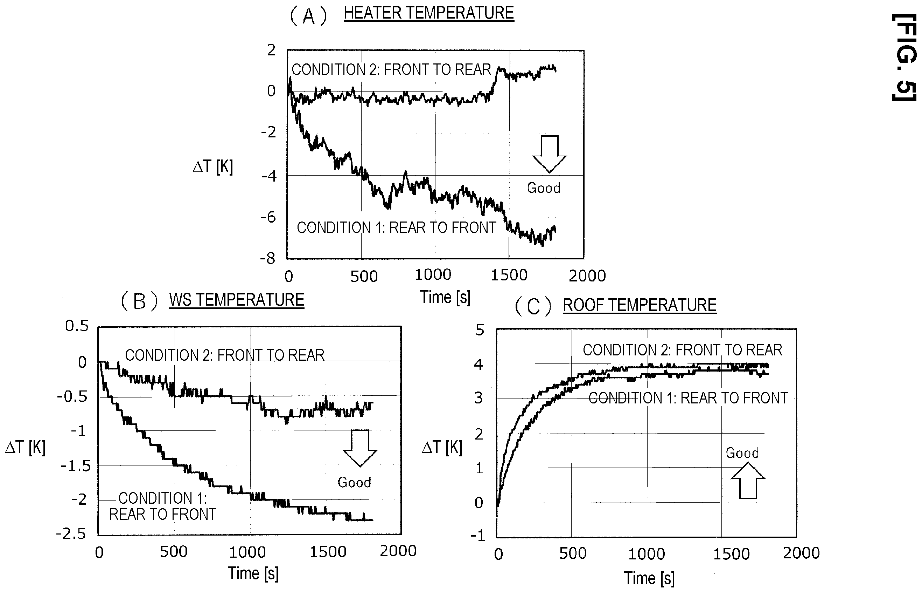

Figure 5 shows the results of testing using conditions 1 and 2. The test procedure was as follows: in the same configuration as that of the airflow generating system shown in Figure 1, a heater and a chiller were operated for 90 minutes, and the airflow generators 5 were then operated to measure temperature change over time.

As is clear from Figure 5(A) and 5(B), in the heater portion and windshield portion, the temperature change was greater when a forward cold airflow F1 was generated from the rear (condition 1) than when a rearward cold airflow F1 was generated from the front (condition 2). As is clear from Figure 5(C), in the roof portion, the temperature change was greater due to the action of the cold source 1, regardless of the direction of the cold airflow F1.

As a result, it was found that in the airflow generation system, due to a forward cold airflow F1 being generated from the rear in the cold airflow path 2 and a rearward circulating airflow F2 being generated from the front in the cabin 50 as shown in Figure 1, heat exchange between the cold air and the heater can occur and the temperature of the cabin 50 can be minimized.

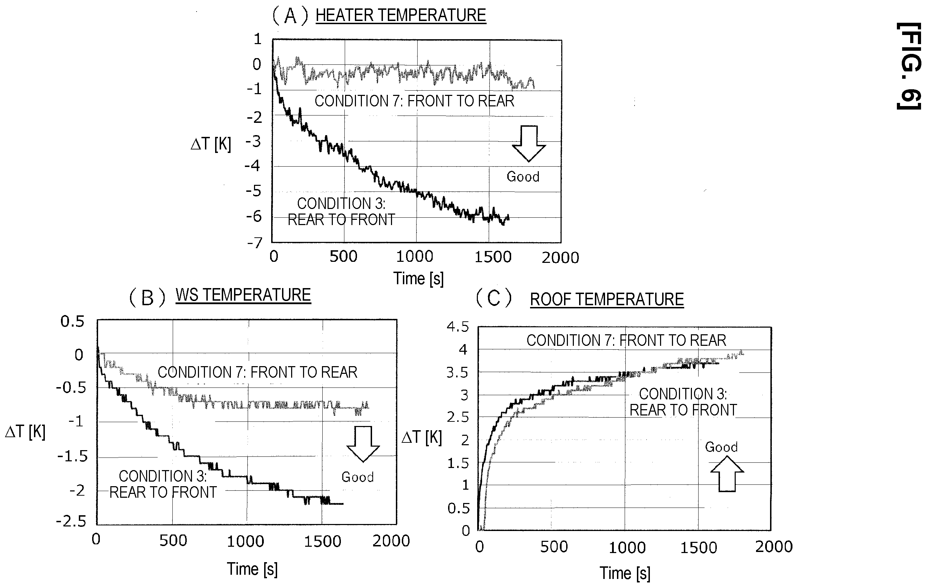

Figure 6 shows the results of testing using conditions 3 and 7. The test procedure was the same as that of the test shown in Figure 5, but the temperature of intake into the cold airflow path 2 was kept uniform.

As is clear from Figures 6(A) and 6(B), in the heater portion and the windshield portion, the temperature change was greater when a forward cold airflow F1 was generated from the rear (condition 3) than when a rearward cold airflow F1 was generated from the front (condition 7). As is clear from Figure 6(C), in the roof portion, the temperature change was greater due to the workings of the cold source 1, regardless of the direction of the cold airflow F1.

As a result, it was found that in the airflow generation system, due to a forward cold airflow F1 being generated from the rear in the cold airflow path 2 and a rearward circulating airflow F2 being generated from the front in the cabin 50, the temperature of the cabin 50 can be minimized regardless of the temperature of intake into the cold airflow path 2.

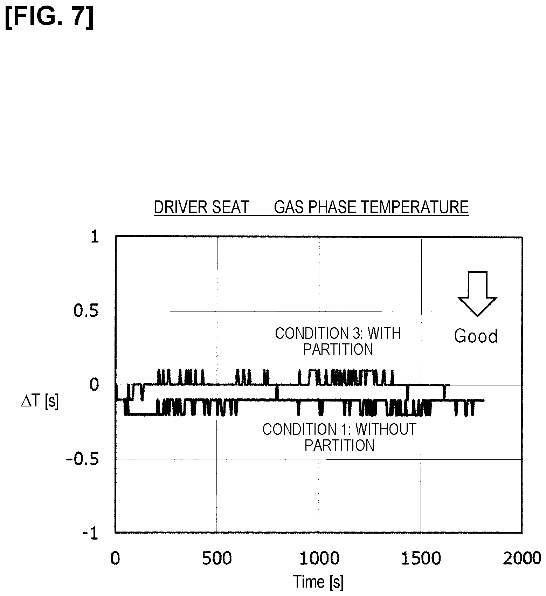

Figure 7 shows the results of testing using conditions 1 and 3. As is clear from Figure 7, in the head portion of the driver seat, under any of the conditions, there was no fluctuation in temperature or in the amount of temperature change, and the cabin 50 cooled easily regardless of whether or not there was a partition.

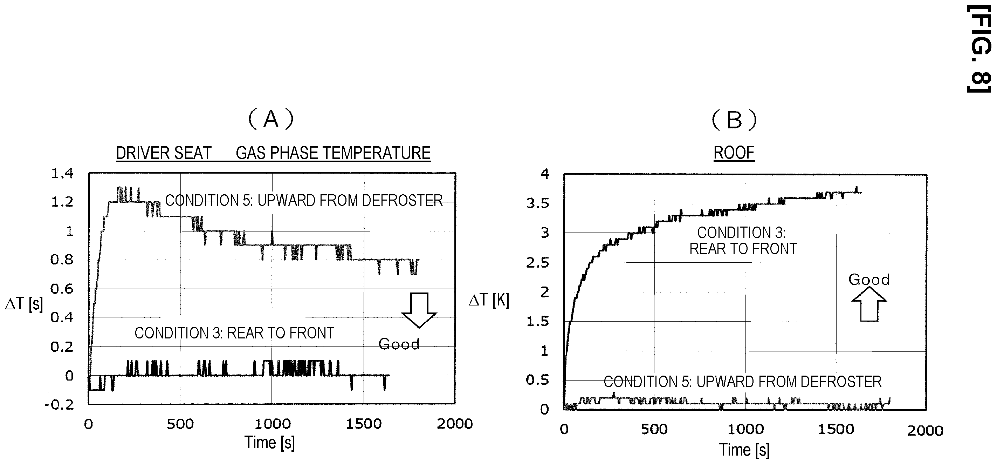

Figure 8 shows the results of testing using conditions 3 and 5. As is clear from Figures 8(A) and 8(B), it was found that in the head portion of the driver seat, air does not flow smoothly into the narrow cold airflow path 2 because the defroster is being operated, and heat exchange does not occur readily, but the amount of temperature change becomes large in the roof portion due to the cold source 1.

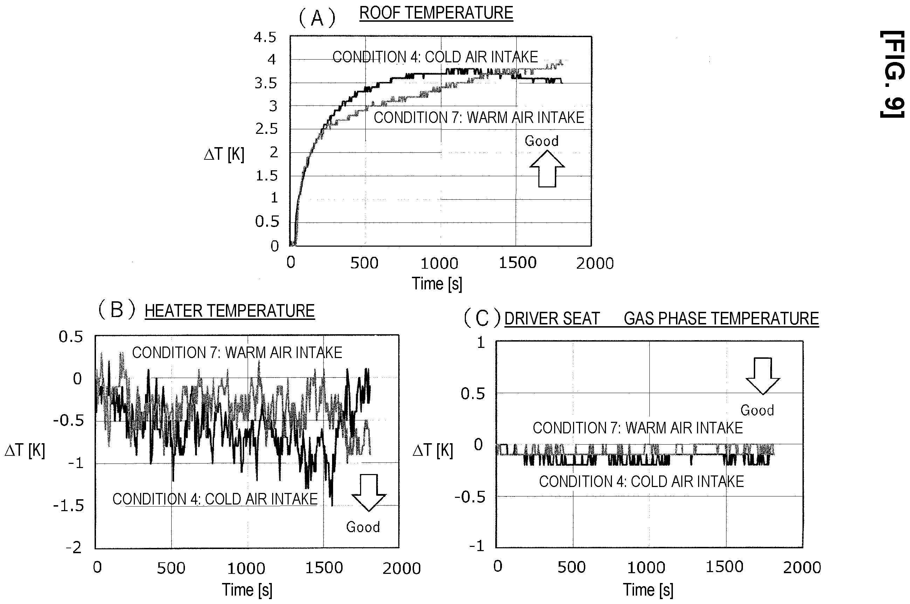

Figure 9 shows the results of testing using conditions 4 and 7. As is clear from Figures 9(A) to 9(C), it was found that when the air flowing into the cold airflow path 2 is warm air or cold air, the cooling speed increases when the air is cold, but the temperature reached is approximately the same in both cases.

From the above, it can be seen that with the airflow generation system according to the present invention, the temperature of the cabin 50 can be minimized to a further extent when the cold airflow F1 is generated in the cold airflow path 2 in a rearward direction from the front than when a defroster is operated. An airflow generation device can most efficiently minimize the temperature of the cabin 50 by generating a cold airflow F1 in the cold airflow path 2 in a forward direction from the rear, as shown in Figure 1.

The configuration of the airflow generation system according to the present invention is not limited to the embodiments described above, and can be changed as appropriate within a range that does not deviate from the scope of the present invention, depending on the structure inside the vehicle cabin and other factors.

### KEY

- 1: Cold source
- 2: Cold airflow path
- 3: Air inflow port
- 4: Air outflow port
- 5: Airflow generator
- 6: Airflow controller
- 7: Automobile air conditioner
- 8: Temperature detector
- 50: Cabin
- 60: Airstream direction adjustment mechanism
- D: Dashboard
- F1: Cold airflow
- F2: Circulating airflow
- R: Roof panel
- T: Roof trim
- V: Vehicle (automobile)

## Claims

1. An airflow generation system comprising:
a cold source disposed on a roof panel of a vehicle and including a radiant cooling function for maintaining a lower temperature than a temperature of a cabin;
a roof trim disposed on an inner side of the roof panel;
a cold airflow path formed between the cold source and the roof trim;
an air inflow port configured to allow air in the cabin to flow into the cold airflow path;
an air outflow port configured to allow air in the cold airflow path to flow out to the cabin; and
an airflow generator configured to generate a cold airflow in the cold airflow path in a direction from the air inflow port to the air outflow port,
an airflow being generated in the cabin and circulating in a direction from the air outflow port to the air inflow port.

2. The airflow generation system according to claim 1, wherein the roof trim has the air inflow port and the air outflow port.

3. The airflow generation system according to claim 1 or 2, wherein the air inflow port is disposed rearward of a center of the roof trim in a vehicle front-rear direction, and the air outflow port is disposed forward of the center of the roof trim in the vehicle front-rear direction.

4. The airflow generation system according to claim 3, wherein the air outflow port is disposed facing upper surfaces of a dashboard and an instrument panel.

5. The airflow generation system according to claim 1, wherein the airflow generator is disposed inside the cold airflow path.

6. The airflow generation system according to claim 1, wherein the airflow generator is disposed outside the cold airflow path, in at least one of the air inflow port and the air outflow port.

7. The airflow generation system according to claim 1, wherein airflow generators are disposed in multiple locations in a vehicle left-right direction.

8. The airflow generation system according to claim 1, further comprising an airflow controller that controls the airflow generator,
the airflow generator having a function of performing at least operation and stopping among operation and stopping of the airflow generator and air flow rate adjustment.

9. The airflow generation system according to claim 8, further comprising a temperature detector that detects a temperature of the cabin,
the airflow controller controlling the airflow generator based on of the temperature detected by the temperature detector.

10. The airflow generation system according to claim 1, further comprising an airstream direction adjustment mechanism that changes a flow direction of air flowing out to the cabin.

11. An automobile roof trim comprising the airflow generation system according to claim 1.

12. A device for controlling an automobile air conditioner, comprising the airflow generation system according to claim 1.

13. An automobile comprising the airflow generation system according to claim 1.
